# EUROPEAN PATENT APPLICATION

(11) **EP 4 835 324 A1**
(43) Date of publication of application: **04.11.2026**
(21) Application number: 24912317.5
(22) Date of filing: 09.12.2024
(51) Int. Cl.: F16H 19/02, B25J 17/00, F16H 59/70, F16H 61/02

(54) **CONTROL DEVICE, ACTUATOR UNIT, AND ROBOT**

(30) Priority: 26.12.2023 JP 2023219613
(71) Applicant: Sumitomo Heavy Industries, Ltd., Tokyo 141-6025 (JP)
(72) Inventor: NAGUMO, Toshiya, Yokosuka-shi Kanagawa 237-8555 (JP)
(74) Representative: Louis Pöhlau Lohrentz
(86) International application number: PCT/JP2024/043375
(87) International publication number: WO 2025/142428

(57) **Abstract**

A control device includes an operation control unit 70 that controls an operation of a drive actuator 14 including a prime mover 22, a transmission 24 that changes a rotational speed input from the prime mover 22 and outputs the changed rotational speed to a driven device 12, and a shift actuator 26 configured to change an actual gear ratio of the transmission 24, in which in a case where the operation control unit 70 attempts to stop the operation of the drive actuator 14, the operation control unit 70 performs gear ratio change control of changing the actual gear ratio of the transmission to a set gear ratio set in advance, by the shift actuator 26.

## Description

### Technical Field

The present disclosure relates to a control device used in a drive actuator.

### Background Art

PTL 1 discloses a drive actuator including a prime mover, and a transmission that changes a rotational speed input from the prime mover and outputs the changed rotational speed to a driven device. In the transmission of PTL 1, a gear ratio, which is a ratio of a rotational speed of an output shaft to a rotational speed of an input shaft, is a fixed ratio.

### Citation List

### Patent Literature

[PTL 1] Japanese Unexamined Patent Publication No. 2020-205742

### Summary of Invention

### Technical Problem

In a case where a transmission having a variable gear ratio is used, the gear ratio can be changed in various ways during the operation of the drive actuator. In addition, in an operation stopped state where the operation of the drive actuator is stopped, a degree to which the rotation of the driven device is suppressed by the transmission is changed depending on the gear ratio of the transmission. Therefore, there is a problem in that the degree of rotation suppression of the driven device by the transmission is changed depending on the gear ratio used immediately before the operation of the drive actuator is stopped each time the operation of the drive actuator is stopped.

Therefore, one of objects of the present disclosure is to provide a technique capable of suppressing a change in a degree of rotation suppression of the driven device by the transmission when the drive actuator is in the operation stopped state.

### Solution to Problem

A control device of the present disclosure includes an operation control unit that controls an operation of a drive actuator including a prime mover, a transmission that changes a rotational speed input from the prime mover and outputs the changed rotational speed to a driven device, and a shift actuator configured to change an actual gear ratio of the transmission, in which in a case where the operation control unit attempts to stop the operation of the drive actuator, the operation control unit performs gear ratio change control of changing the actual gear ratio of the transmission to a set gear ratio set in advance, by the shift actuator.

### Advantageous Effects of Invention

According to the present disclosure, it is possible to suppress a change in a degree of rotation suppression of the driven device by the transmission when the drive actuator is in the operation stopped state.

### Brief Description of Drawings

FIG. 1 is a block diagram of an actuator unit of a first embodiment.
FIG. 2 is a side cross-sectional view of a transmission of the first embodiment.
FIG. 3 is a schematic diagram of a shift actuator of the first embodiment.
FIG. 4 is a schematic diagram showing a use example of an actuator unit of a second embodiment.

### Description of Embodiments

Hereinafter, an embodiment for implementing a drive actuator of the present disclosure will be described. The same or equivalent elements will be denoted by the same reference numerals, and the duplicate description thereof will be omitted. In each drawing, the components are omitted, enlarged, or reduced as appropriate for convenience of description. The drawings need to be viewed in accordance with the directions of the reference numerals.

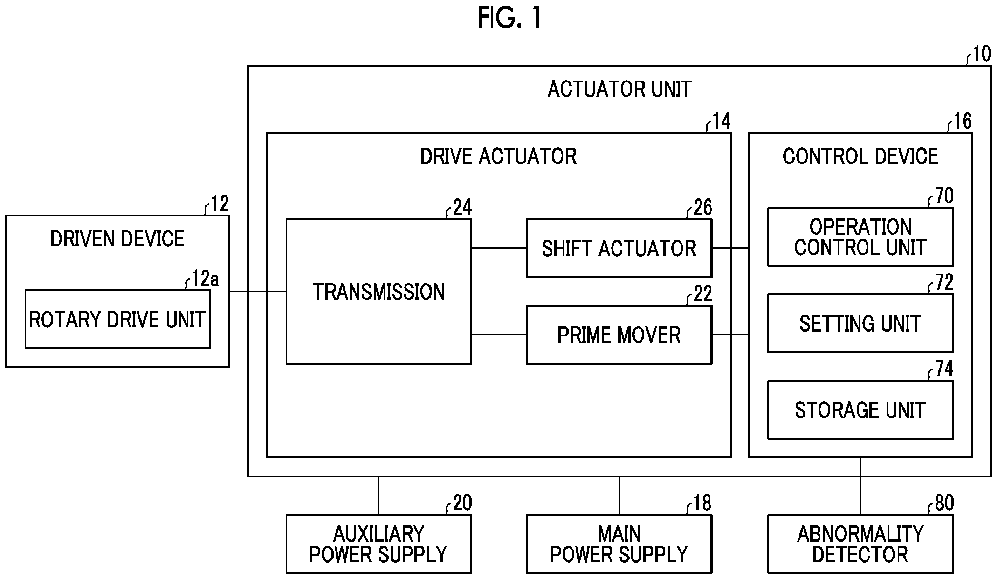

(First Embodiment) The description will be made with reference to FIG. 1. An actuator unit 10 is used to drive a driven device 12. The driven device 12 is, for example, a ball screw device used for a transport device, a positioning device, or the like. The driven device 12 includes a rotary drive unit 12a that is rotationally driven by the actuator unit 10. The rotary drive unit 12a is, for example, a screw shaft used for a ball screw device. A specific example of the driven device 12 is not particularly limited, and may be a part of an industrial machine (a machine tool, a construction machine, or the like), a robot (an industrial robot, a service robot, or the like), transportation equipment (a conveyor, a vehicle, or the like), or the like.

The actuator unit 10 includes a drive actuator 14 that drives the driven device 12, and a control device 16 that controls an operation of the drive actuator 14. The drive actuator 14 and the control device 16 operate using power supplied from an external main power supply 18 or an external auxiliary power supply 20. The main power supply 18 is, for example, a commercial power supply. The auxiliary power supply 20 is, for example, an uninterruptible power system (UPS), an output hold time extension module, or the like.

The drive actuator 14 includes a prime mover 22, a transmission 24 that changes a rotational speed input from the prime mover 22 and outputs the changed rotational speed to the driven device 12, and a shift actuator 26 that can change a gear ratio of the transmission 24. Hereinafter, when the driven device 12 and the rotation of the prime mover 22 are mentioned, the rotation of the entire object that rotates in the object to be mentioned is referred to. For example, when the rotation of the driven device 12 is mentioned, the rotation of the entire object (the rotary drive unit 12a or the like) that rotates in the driven device 12 is referred to, and when the rotation of the prime mover 22 is mentioned, the rotation of the entire object (the prime mover shaft or the like) that rotates in the prime mover 22 is referred to.

The prime mover 22 can rotate a prime mover shaft (not shown) by a torque generated inside the prime mover 22, and then output the rotation from the prime mover shaft to the transmission 24. The prime mover 22 of the present embodiment is a motor (electric motor) that rotates the prime mover shaft by using electric energy. The motor can rotate the prime mover shaft by a torque generated by a stator and a rotor that cooperate with each other. A specific example of the prime mover 22 is not particularly limited, and may be, for example, an engine that rotates the prime mover shaft by using thermal energy.

The shift actuator 26 can change the gear ratio of the transmission 24 by inputting power to the transmission 24. The shift actuator 26 of the present embodiment is a linear actuator, and inputs power along an axial direction of the transmission 24 to the transmission 24. The specific type of the shift actuator 26 is not particularly limited as long as the shift actuator 26 can change the gear ratio of the transmission 24, and the shift actuator 26 may be a rotary actuator or the like.

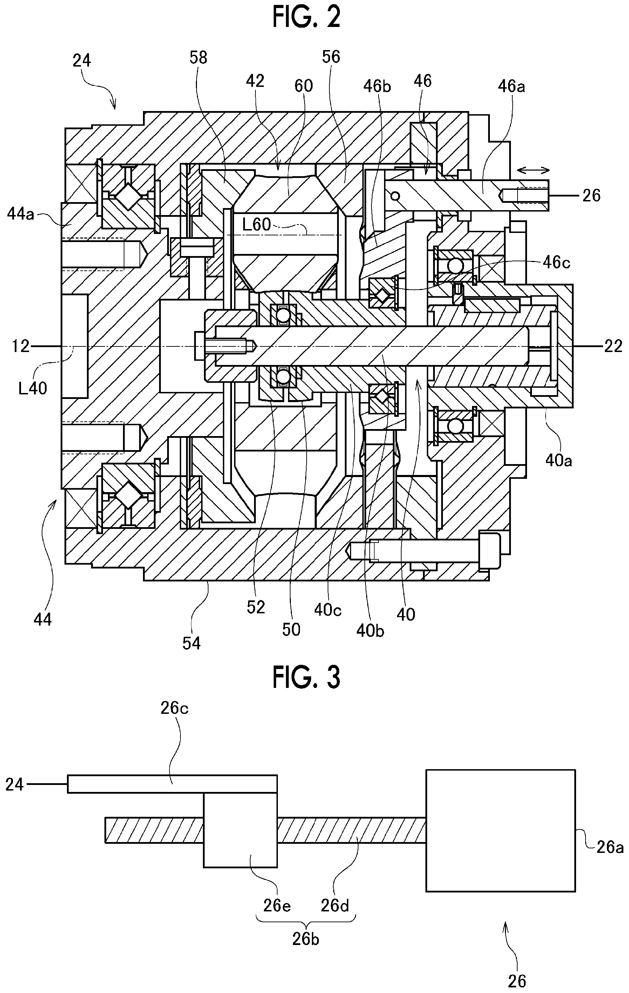

The description will be made with reference to FIG. 2. The transmission 24 includes an input shaft 40 to which rotation is input from the prime mover 22, a transmission mechanism 42 that changes the rotational speed input to the input shaft 40 and then transmits the changed rotational speed to an output shaft 44, the output shaft 44 that outputs the rotation transmitted from the transmission mechanism 42 to a driven device, and a gear ratio changing mechanism 46 that changes the gear ratio of the transmission mechanism 42.

The transmission 24 of the present embodiment can steplessly (continuously) change an actual gear ratio, which is an actual gear ratio, by using the gear ratio changing mechanism 46 via the shift actuator 26. The gear ratio here means a ratio of an output rotational speed, which is a rotational speed of the output shaft 44, to an input rotational speed, which is a rotational speed of the input shaft 40 (= output rotational speed/input rotational speed). The transmission 24 of the present embodiment is an infinitely variable transmission (IVT) and is configured such that a variable range of the actual gear ratio includes zero (= 1/∞). Here, an example of the transmission 24 will be described, but the specific example is not particularly limited. For example, the transmission 24 may be a troidal-type continuously variable transmission or the like. In addition, the transmission 24 may not include zero in the variable range. In this case, the continuously variable transmission may be, for example, a belt-type continuously variable transmission, a chain-type continuously variable transmission, or the like. In addition, the transmission 24 may be a continuously variable transmission that can change the gear ratio in a stepwise manner instead of the continuously variable transmission that can continuously change the gear ratio.

The input shaft 40 includes an input member 40a to which the rotation is input from the prime mover 22, a shaft 40b connected to the input member 40a, and a sleeve 40c fixed to the shaft 40b. The specific structure of the input shaft 40 is not particularly limited as long as the rotation can be transmitted from the prime mover 22 to the transmission mechanism 42. The input shaft 40 here is an example configured by a plurality of members, but may be configured by a single member, and the number of members is not particularly limited.

The transmission mechanism 42 includes an input raceway 50 provided to be integrally rotatable with the input shaft 40, a first support raceway 52 rotatably supported by the input shaft 40, a second support raceway 56 provided to be movable in an axial direction in a casing 54 of the transmission 24, an output raceway 58 provided to be integrally rotatable with the output shaft 44, and a plurality of planetary rolling elements 60 that roll on the raceways 50, 52, 56, and 58. The plurality of planetary rolling elements 60 are pressed against the output raceway 58 by a pressing force applied from the second support raceway 56 by a pressing force applying mechanism (not shown).

When the input raceway 50 rotates, the planetary rolling element 60 revolves around a rotational axis line L40 (orbital axis) of the input shaft 40 while rotating around an axis of rotation L60. When the planetary rolling element 60 revolves, the output raceway 58 rotates around the rotational axis line L40 following the planetary rolling element 60. In this case, ideally, the output raceway 58 rotates at an output rotational speed obtained by multiplying an input rotational speed of the input shaft 40 by the gear ratio. The gear ratio is determined according to a tilt angle of the axis of rotation L60 with respect to the rotational axis line L40, and is changed by the gear ratio changing mechanism 46.

The output shaft 44 includes the output raceway 58 and an output member 44a that is connected to the output raceway 58 to be integrally rotated and outputs the rotation to the driven device 12. The specific structure of the output shaft 44 is not particularly limited as long as the rotation can be transmitted from the transmission mechanism 42 to the driven device 12. The output shaft 44 here is an example configured by a plurality of members, but may be configured by a single member, and the number of members is not particularly limited.

The gear ratio changing mechanism 46 of the present embodiment can change the gear ratio by changing the position of the input raceway 50. The gear ratio changing mechanism 46 includes a shaft 46a that is movable in an axial direction by power output from the shift actuator 26, and a ring member 46b that is integrally movable in an axial direction with the shaft 40b. The ring member 46b rotatably supports the input shaft 40 via a bearing 46c, and is integrally movable in an axial direction with the input shaft 40 by a retaining ring or the like. The specific example of the gear ratio changing mechanism 46 is not particularly limited, and various similar mechanisms adopted in the transmission 24 may be adopted.

When power in the axial direction is input to the shaft 46a from the shift actuator 26, the input shaft 40 (including the input raceway 50 and the first support raceway 52) is integrally moved in the axial direction together with the ring member 46b. The input raceway 50 and the first support raceway 52 are moved in the axial direction with respect to the second support raceway 56 and the output raceway 58, so that the tilt angle of the axis of rotation L60 of the planetary rolling element 60 with respect to the rotational axis line L40 is changed, and the gear ratio is changed according to the tilt angle. The gear ratio is zero (= 1/∞) when the axis of rotation L60 is parallel to the rotational axis line L40, and is continuously increased as the tilt angle of the axis of rotation L60 with respect to the rotational axis line L40 is increased. That is, the actual gear ratio can be changed in a stepless (continuous) manner, and the variable range is configured to include zero.

FIG. 1 is referred to again. The control device 16 is configured by a combination of a hardware element and a software element, or only the hardware element. For example, a processor, a read only memory (ROM), and a random access memory (RAM) are used as the hardware element. For example, a program such as an operating system or an application is used as the software element. A portion used for controlling the prime mover 22 and a portion used for controlling the shift actuator 26 may be implemented by a common hardware element or software element, or may be implemented by separate hardware elements or software elements. The control device 16 is attached to the drive actuator 14 and can be handled integrally with the drive actuator 14.

The control device 16 includes an operation control unit 70 that controls the operation of the drive actuator 14, a setting unit 72 that sets a set gear ratio (described later) used for the control by the operation control unit 70 to be variable, and a storage unit 74 that stores data used for the control by the operation control unit 70. The operation control unit 70 can change the torque generated by the prime mover 22 by controlling the operation of the prime mover 22. The operation control unit 70 can change the gear ratio of the transmission 24 by controlling the operation of the shift actuator 26.

The operation control unit 70 performs operation stop control of stopping the operation of the drive actuator 14 by controlling the drive actuator 14 in a case where an operation stop condition (described later) determined in advance is satisfied. The operation stop control is performed in a case where the operation of the drive actuator 14 is to be stopped. Here, the "stopping the operation of the drive actuator 14" means stopping the operation of each power transmission element of the drive actuator 14. Here, the power transmission element means an element used for transmitting the torque (power) generated by the prime mover 22 to the driven device 12, and means a prime mover shaft of the prime mover 22, the input shaft 40 of the transmission 24, the transmission mechanism 42, the output shaft 44, and the like.

The operation stop control may be performed, for example, by generating a braking torque for braking each power transmission element of the drive actuator 14 by the prime mover 22. In this case, in a case where an electric motor capable of generating a regenerative brake is used as the prime mover 22, regenerative energy may be generated while the braking torque is generated by the prime mover 22. In addition, in a case where the drive actuator 14 includes a brake device, the operation stop control may be performed by generating the braking torque by the brake device. In addition, the operation stop control may be performed by waiting until the operation of each power transmission element of the drive actuator 14 is naturally stopped without generating the braking torque by the prime mover 22 and the brake device.

In a case where the operation control unit 70 attempts to stop the operation of the drive actuator 14 by the operation stop control, the operation control unit 70 performs gear ratio change control of changing the actual gear ratio of the transmission 24 to a set gear ratio set in advance, in the shift actuator 26. In the gear ratio change control, the operation control unit 70 changes the actual gear ratio to the set gear ratio set in advance by the setting unit 72. In this case, the operation control unit 70 reads out the set gear ratio stored in the storage unit 74 by the setting unit 72, and changes the actual gear ratio to the read-out set gear ratio.

In the gear ratio change control, the operation control unit 70 changes the actual gear ratio of the transmission 24 during the operation of the transmission 24, specifically, during the operation of at least the input shaft 40 and the transmission mechanism 42 of the transmission 24. After the change of the actual gear ratio of the transmission 24 by the gear ratio change control is completed, the operation of each power transmission element of the drive actuator 14 is stopped by the operation stop control. This is because the actual gear ratio of the transmission 24 cannot be smoothly changed by the shift actuator 26 unless the input shaft 40 and the transmission mechanism 42 of the transmission 24 are operated. In order to perform the gear ratio change control while the transmission 24 is operated in this way, the gear ratio change control may be performed while the rotation detector (not shown) detects that the input shaft 40 of the transmission 24 or the prime mover 22 is rotated.

The operation control unit 70 completes the operation stop control when the operation of each power transmission element of the drive actuator 14 is stopped, that is, when the operation of the drive actuator 14 is stopped. The fact that the operation of the drive actuator 14 is stopped may be understood by detecting the rotation stop of each power transmission element of the drive actuator 14 by the rotation detector (not shown). When the drive actuator 14 is in the operation stopped state, the operation control unit 70 may stop the supply of power to each electric machine (the prime mover 22, the shift actuator 26, and the like) used in the drive actuator 14. As a result, each electric machine is in a non-energized state in which the electric machine is not energized.

In describing the set gear ratio set by the setting unit 72, a concept that is a premise will be described. In a case where the actual gear ratio is set to zero or a value extremely close to zero, the transmission 24 is in a locked state (self-locked state) in which the rotation of the output side (output shaft 44) of the transmission 24 is locked together with the driven device 12. The locked state refers to a state in which it is difficult to rotate the transmission 24 from the output side, that is, a state in which it is difficult to rotate the driven device 12 (the rotary drive unit 12a of the driven device 12). In this case, the input side (input shaft 40) of the transmission 24 can be rotated, but the output side of the transmission 24 cannot be rotated at all or almost at all because the actual gear ratio is extremely small. On the other hand, in a case where the actual gear ratio of the transmission 24 is set to be away from zero, the rotation of the output side of the transmission 24 is allowed together with the driven device 12 in a rotation-allowed state.

The setting unit 72 sets the set gear ratio used for the gear ratio change control described above to be variable. The set gear ratio is set as a variable value that can be changed. When the set gear ratio is set, the setting unit 72 stores the set gear ratio in the storage unit 74. The setting unit 72 can set, as the set gear ratio, any one of a lock gear ratio that is determined in advance as the gear ratio of the transmission 24 for locking the rotation of the driven device 12 and a rotation-allowing gear ratio that is determined in advance as the gear ratio for allowing the rotation of the driven device 12. The lock gear ratio refers to a gear ratio that is determined in advance as the gear ratio for putting the driven device 12 in the locked state described above by locking the rotation of the driven device 12. In addition, the rotation-allowing gear ratio here refers to a gear ratio that is determined in advance as the gear ratio for putting the driven device 12 in the rotation-allowed state described above by allowing the rotation of the driven device 12. For example, the lock gear ratio is determined within a gear ratio range of zero (= 1/∞) to 1/thousands, and the rotation-allowing gear ratio is determined within a gear ratio range of 1/200 to 1/tens. Each of the gear ratio ranges described here is merely an example, and the set gear ratio may be set within a gear ratio range other than the gear ratio ranges.

The setting unit 72 may set the set gear ratio in response to a command from a user or an external controller. The external controller here refers to, for example, a host controller that comprehensively controls the operations of the plurality of drive actuators 14. In setting the set gear ratio in response to a designation from a user, the drive actuator 14 may include a first operation unit that outputs a designated gear ratio designated by the user through a user's operation to the control device 16 as a command from the user. In this case, the setting unit 72 may set the designated gear ratio output from the first operation unit as the set gear ratio. The first operation unit is configured by, for example, an information processing terminal such as a touch panel, in addition to a switch or the like provided on a control panel.

The setting unit 72 may be capable of continuously or stepwise changing the set gear ratio within a rotation-allowing gear ratio range that is determined in advance as the gear ratio range for allowing the rotation of the driven device 12 described above. The setting unit 72 of the present embodiment can set the set gear ratio to the lock gear ratio, and can set the set gear ratio to any one of the plurality of rotation-allowing gear ratios. The rotation-allowing gear ratio range may be, for example, the gear ratio range of 1/200 to 1/tens described above.

In a case where the lock gear ratio is set as the set gear ratio by the setting unit 72, the operation control unit 70 changes the actual gear ratio of the transmission 24 to the lock gear ratio in the gear ratio change control. Accordingly, in a case where the drive actuator 14 is in the operation stopped state, the driven device 12 can be in the locked state in which the rotation of the driven device 12 is locked. In this case, the operation control unit 70 may change the actual gear ratio of the transmission 24 from the lock gear ratio to the rotation-allowing gear ratio by the shift actuator 26 before starting the driving of the driven device 12 after starting the operation of the drive actuator 14.

In a case where the rotation-allowing gear ratio is set as the set gear ratio by the setting unit 72, the operation control unit 70 changes the actual gear ratio of the transmission 24 to the rotation-allowing gear ratio in the gear ratio change control. Accordingly, in a case where the drive actuator 14 is in the operation stopped state, the driven device 12 can be in the rotation-allowed state in which the rotation of the driven device 12 can be allowed.

The effects of the control device 16 described above will be described. The operation control unit 70 of the control device 16 performs the gear ratio change control of changing the actual gear ratio of the transmission 24 to the set gear ratio by the shift actuator 26 when the operation of the drive actuator 14 is to be stopped. Therefore, the actual gear ratio when the drive actuator 14 is in the operation stopped state can be set to the set gear ratio regardless of the actual gear ratio used immediately before the operation of the drive actuator 14 is stopped. Therefore, in a case where the drive actuator 14 is in the operation stopped state, it is possible to suppress the change in the degree of rotation suppression of the driven device 12 by the transmission 24.

In a case where the drive actuator 14 is in the operation stopped state, a case where the power transmission element of the drive actuator 14 is braked by the spring-applied brake in order to lock the rotation of the driven device 12 will be considered. In this case, in order to release the braking by the spring-applied brake, there is a problem in that the constant supply of power to the spring-applied brake is required, which leads to an increase in energy consumption and heat generation amount. In this regard, the operation control unit 70 of the present embodiment can change the actual gear ratio of the transmission 24 to the lock gear ratio by the gear ratio change control. Therefore, in a case where the drive actuator 14 is in the operation stopped state, the rotation of the driven device 12 can be locked by the transmission 24 by changing the actual gear ratio of the transmission 24 to the lock gear ratio in advance by the gear ratio change control. In addition, in order to release the lock by the transmission 24, it is sufficient to change the actual gear ratio of the transmission 24 by the shift actuator 26, and it is not necessary to constantly supply power as in a case where the spring-applied brake is used. Therefore, it is possible to lock the rotation of the driven device 12 when the drive actuator 14 is in the operation stopped state while advantageously solving the problem of an increase in energy consumption and heat generation amount.

The control device 16 includes a setting unit 72 that sets the set gear ratio to be variable. Therefore, by changing the set gear ratio set by the setting unit 72, it is possible to adjust the degree of rotation suppression of the driven device 12 by the transmission 24 when the drive actuator 14 is in the operation stopped state. Accordingly, by adjusting the actual degree of rotation suppression according to the required degree of rotation suppression of the driven device 12, it is possible to increase the operational flexibility of the drive actuator 14.

The setting unit 72 can selectively set any one of the lock gear ratio for locking the rotation of the driven device 12 and the rotation-allowing gear ratio for allowing the rotation as the set gear ratio. Therefore, by setting any one of the lock gear ratio and the rotation-allowing gear ratio as the set gear ratio, it is possible to select any one of the locked state and the rotation-allowed state as the state of the driven device 12 when the drive actuator 14 is in the operation stopped state. Accordingly, it is possible to further increase the operational flexibility of the drive actuator 14.

In order to enable the selection of any one of the locked state and the rotation-allowed state as the state of the driven device 12, a method of realizing the selection by changing hardware is also conceivable. The change in hardware here refers to switching the presence or absence of the incorporation of the electromagnetic brake into the drive actuator 14. In this regard, according to the present embodiment, there is an advantage that any one of the locked state and the rotation-allowed state can be selected as the state of the driven device 12 by simply changing the set gear ratio without changing the hardware.

The setting unit 72 can change the set gear ratio in a stepwise or continuous manner within the rotation-allowing gear ratio range determined in advance as the gear ratio range in which the rotation of the driven device 12 is allowed. Accordingly, when the drive actuator 14 is in the operation stopped state, it is possible to adjust the degree of rotation suppression of the driven device 12 by the transmission 24 while allowing the rotation of the driven device 12. As a result, it is possible to further increase the operational flexibility of the drive actuator.

Next, the operation stop condition described above will be described. The operation stop condition is, for example, (1) receiving an operation stop command from the user or the external controller, (2) an abnormality occurring in the main power supply 18, or the like.

In receiving the operation stop command from the user in (1), the drive actuator 14 may include a second operation unit for outputting the operation stop command to the control device 16 in accordance with the operation of the user. The second operation unit is configured by, for example, an information processing terminal such as a touch panel, in addition to a switch or the like provided on a control panel. The switch may be a power switch that switches the presence or absence of the power supply to the drive actuator 14. In this case, the second operation unit may output the operation stop command to the control device 16 by an off operation for stopping the power supply. When the condition of (1) is satisfied, the operation control unit 70 may operate each electric machine (the prime mover 22, the shift actuator 26, and the like) used in the drive actuator 14 by using the power supplied from the main power supply 18 in performing the operation stop control and the gear ratio change control described above. In addition, instead of this, the operation control unit 70 may operate each electric machine by using the power supplied from the auxiliary power supply 20.

(2) will be described. An abnormality detector 80 that detects an abnormality of the main power supply 18 is provided outside the drive actuator 14. When the abnormality of the main power supply 18 is detected, the abnormality detector 80 outputs an abnormality detection signal indicating the detection to the control device 16. The abnormality here refers to an abnormality related to the power supply from the main power supply 18 to the drive actuator 14, such as a power outage of the main power supply 18, an abnormal voltage drop in the power supplied from the main power supply 18, or an abnormal voltage rise. The abnormality detector 80 may detect the abnormality of the main power supply 18 by using various detection methods including a known method. For example, when the voltage value of the power supplied from the main power supply 18 is equal to or greater than an allowable value determined in advance, the abnormality detector 80 may detect the abnormality of the main power supply 18 due to the abnormal voltage rise.

When the operation control unit 70 of the control device 16 does not acquire the abnormality detection signal from the abnormality detector 80, that is, when the abnormality does not occur in the main power supply 18, the operation control unit 70 operates the drive actuator 14 by using the power supplied from the main power supply 18. In this case, the drive actuator 14 is operated by operating each electric machine (the prime mover 22, the shift actuator 26, and the like) used in the drive actuator 14 by using the power supplied from the main power supply 18. On the other hand, when the operation control unit 70 acquires the abnormality detection signal output from the abnormality detector 80 during the operation of the drive actuator 14, the operation control unit 70 performs the operation stop control and the gear ratio change control described above by using the power supplied from the auxiliary power supply 20. In this case, the operation stop control or the like is performed by operating each electric machine by using the power supplied from the auxiliary power supply 20. When the abnormality detection signal is acquired during the operation of the drive actuator 14, the power supply used in the drive actuator 14 is switched from the main power supply 18 to the auxiliary power supply 20. As a result, even when the abnormality occurs in the main power supply 18, the operation control unit 70 of the control device 16 can perform the gear ratio change control by using the power supplied from the auxiliary power supply 20, and then the drive actuator 14 can transition to the operation stopped state.

Next, the characteristics of the shift actuator 26 will be described. The description will be made with reference to FIG. 3. The shift actuator 26 includes a power source 26a that generates power, a transmission mechanism 26b that transmits the power generated by the power source 26a, and an output unit 26c that outputs the power transmitted from the transmission mechanism 26b to the transmission 24. The actual gear ratio of the transmission 24 is changed by the gear ratio changing mechanism 46 by inputting the power output from the output unit 26c to the gear ratio changing mechanism 46 of the transmission 24.

The power source 26a of the present embodiment is a motor that generates rotational power. The transmission mechanism 26b of the present embodiment is a feed screw mechanism, and includes a screw shaft 26d that is rotated by the power source 26a, and a ball nut 26e that is linearly movable with the rotation of the screw shaft 26d. A spiral first screw groove (not shown) is formed on an outer peripheral surface of the screw shaft 26d, a spiral second screw groove (not shown) is formed on an inner peripheral surface of the ball nut 26e, and a ball is disposed in a spiral space surrounded by the first and second screw grooves. The output unit 26c of the present embodiment is a moving body that is integrally linearly movable with the ball nut 26e of the transmission mechanism 26b.

The transmission mechanism 26b has a self-locking function that allows the transmission of power from the input side (power source 26a) to the output side (output unit 26c) and restricts the transmission of power from the output side to the input side. In order to realize this, in the feed screw mechanism configured by the transmission mechanism 26b, when the power source 26a generates the rotational power, the rotational power is converted into linear power of the ball nut 26e by the rotation of the screw shaft 26d accompanied by the rolling of the ball, and the converted linear power is transmitted to the output unit 26c. As a result, the transmission of power from the input side to the output side is allowed. On the other hand, when the linear power is transmitted from the output unit 26c to the ball nut 26e, the movement of the screw shaft 26d by the linear power is restricted by the contact between the screw grooves of the ball nut 26e and the screw shaft 26d and the ball in the spiral space, and the transmission of the linear power to the power source 26a is restricted. As a result, the transmission of power from the output side to the input side is restricted by the self-locking function. This self-locking function is realized even in a non-energized state in which power is not supplied to the shift actuator 26.

By this self-locking function, in a case where the actual gear ratio of the transmission 24 is changed, the power generated by consuming the power by the power source 26a can be transmitted from the input side to the output side, and thus the actual gear ratio can be changed. In addition, during the operation of the drive actuator 14, a force to change the actual gear ratio of the transmission 24 acts, and thus the power may be transmitted from the output side to the input side to the shift actuator 26. In this case, the transmission of power from the output side to the input side is restricted by the self-locking function of the shift actuator, so that the actual gear ratio of the transmission 24 can be maintained even without supplying power to the shift actuator 26. Therefore, the energy consumption and the heat generation amount of the shift actuator 26 can be reduced, and the energy efficiency can be improved, as compared with a case where the power supply to the shift actuator 26 is always required to maintain the actual gear ratio of the transmission 24.

A specific configuration for realizing the transmission mechanism 26b having the self-locking function is not particularly limited. For example, a combination of a worm and a worm wheel known to have such a self-locking function may be used. In addition, the shift actuator 26 may not include the transmission mechanism 26b having the self-locking function. In this case, the shift actuator 26 may be configured using, for example, an electromagnetic solenoid or the like without using a feed screw mechanism.

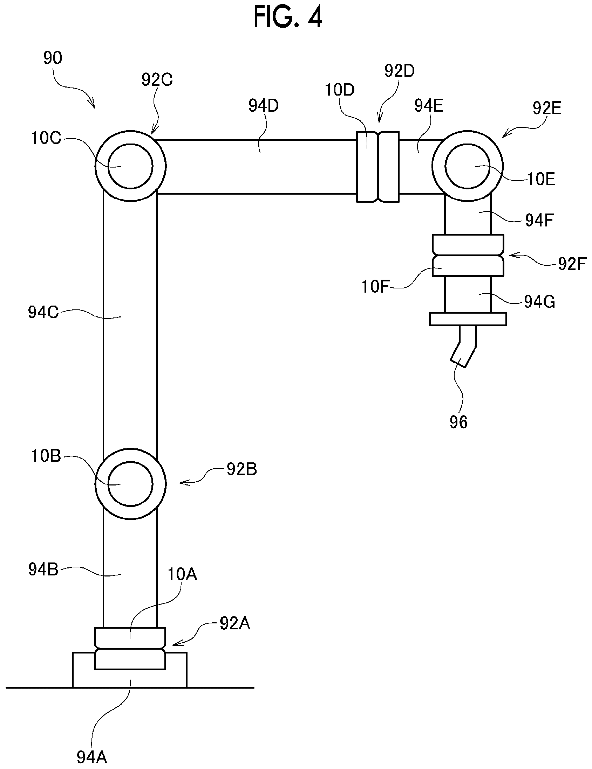

(Second Embodiment) Next, another use example of the actuator unit will be described. The description will be made with reference to FIG. 4. Here, an example in which the actuator unit is used in a robot 90 will be described. The robot 90 of the present embodiment is a cooperative robot for working in cooperation with a person, but a specific example thereof is not particularly limited, and may be various industrial robots or service robots.

The robot 90 of the present embodiment is an articulated robot having six joints. The number of joints is not particularly limited, and may be any of two to five or seven or more. The robot 90 includes a plurality of joint portions 92A to 92F and a plurality of robot members 94A to 94G connected in series by the plurality of joint portions 92A to 92F. In the robot 90, the robot member 94A closest to the base end side is a base member, and the robot members 94B to 94G on the distal end side of the robot member 94A are arm members. An attachment 96 such as a gripper is attachably and detachably mounted on the robot member 94G (arm member) closest to the distal end side.

The robot 90 includes actuator units 10A to 10F that are incorporated into the respective joint portions 92A to 92F and that drive the joint portions 92A to 92F. The term "driving the joint portion" herein means rotating (changing the relative position) the arm member on the distal end side with respect to the arm member on the base end side connected by the joint portions 92A to 92F. In this case, the driven device 12 described above is the arm member on the distal end side connected by the joint portions 92A to 92F. In the present embodiment, there are a first joint portion 92A, a second joint portion 92B, ..., and a sixth joint portion 92F, and there are a first actuator unit 10A, a second actuator unit 10B, ..., and a sixth actuator unit 10F incorporated into the first joint portion 92A, the second joint portion 92B, ..., and the sixth joint portion 92F. Here, the first joint portion 92A and the sixth joint portion 92F closest to the base end side and the distal end side are rotatable around the vertical axis, and the other joint portions 92B to 92E are rotatable around the horizontal axis.

Each of the actuator units 10A to 10F has the same configuration as the actuator unit of the first embodiment. The respective setting units 72 of the control devices 16 of the actuator units 10A to 10F can set the set gear ratio independently of each other. For example, the control device 16 of the first actuator unit 10A can set the lock gear ratio as the set gear ratio, and the control device 16 of the second actuator unit 10B can set the rotation-allowing gear ratio as the set gear ratio.

Accordingly, when each of the actuator units 10A to 10F used in the robot 90 is in the operation stopped state, the set gear ratio set for each of the actuator units 10A to 10F used in the respective joint portions 92A to 92F is changed, so that the degree of rotation suppression for each of the joint portions 92A to 92F can be changed. Therefore, the operational flexibility of the robot 90 can be increased as compared with a case where the degree of rotation suppression is the same for all the joint portions 92A to 92F. For example, a case is considered in which the set gear ratio is set to the lock gear ratio only for the actuator units 10A and 10F used in the joint portions 92A and 92F that can rotate around the vertical axis, and the set gear ratio is set to the rotation-allowing gear ratio for the actuator units 10B to 10E used in the other joint portions 92B to 92E. In this case, it is possible to allow the position adjustment in the other joint portions 92B to 92E while avoiding a situation in which the joint portions 92A and 92F of the robot 90 are turned around the vertical axis. In addition, in a case where the set gear ratio is set to the lock gear ratio for the actuator unit 10 used in the joint portions 92B to 92E that can rotate around the horizontal axis of the robot 90, there is also an advantage that sagging caused by the rotation due to the own weight around the horizontal axis can be suppressed.

The cooperative robot is used in a wide range of applications in various industries such as food, logistics, and restaurant, as compared with an industrial robot that is mainly used for simple work in manufacturing. Therefore, the work is often performed near a person, and the demand for flexibility in operation is higher than that of an industrial robot used for simple work. In a case where the cooperative robot is used, it is advantageous in that the flexibility in operation can be increased as described above.

Modifications of the above-described embodiments will be described. The setting unit 72 of the control device 16 may not be able to set the set gear ratio to be variable. In this case, the set gear ratio is set as a fixed value that cannot be changed. Hereinbefore, an example has been described in which the setting unit 72 can set any one of the lock gear ratio and the rotation-allowing gear ratio as the set gear ratio in setting the set gear ratio to be variable. In addition, in setting the set gear ratio to be variable, the setting unit 72 may not be configured to set the lock gear ratio as the set gear ratio, and may be configured to set the set gear ratio in a stepwise or continuous manner only within the rotation-allowing gear ratio range.

The embodiments and modifications described above are examples. The technical idea abstracted from these examples should not be construed as being limited to the contents of the embodiment. The contents of the embodiment can be subjected to many design changes such as changes, additions, and deletions of components. In the embodiments described above, the content for which such design changes can be made is emphasized by adding a notation "embodiment". However, design changes are allowed even when there is no notation in the contents. Hatching added to the cross section in the drawing does not limit a material of a hatched subject. In addition, any of the components and expressions of the present disclosure may be replaced with each other between a method, a device, a system, or the like, and the replacement is also effective as an aspect of the present disclosure.

### Industrial Applicability

The present disclosure relates to a control device used in a drive actuator.

### Reference Signs List

- 10: actuator unit
- 10A: first actuator unit
- 10B: second actuator unit
- 12: driven device
- 14: drive actuator
- 16: control device
- 18: main power supply
- 20: auxiliary power supply
- 22: prime mover
- 24: transmission
- 26: shift actuator
- 70: operation control unit
- 72: setting unit
- 90: robot
- 92A: first joint portion
- 92B: second joint portion

## Claims

1. A control device comprising:
an operation control unit that controls an operation of a drive actuator including a prime mover, a transmission that changes a rotational speed input from the prime mover and outputs the changed rotational speed to a driven device, and a shift actuator configured to change an actual gear ratio of the transmission,
wherein in a case where the operation control unit attempts to stop the operation of the drive actuator, the operation control unit performs gear ratio change control of changing the actual gear ratio of the transmission to a set gear ratio set in advance, by the shift actuator.

2. The control device according to claim 1,
wherein the operation control unit changes the actual gear ratio to a lock gear ratio set as the set gear ratio and determined in advance as a gear ratio for locking rotation of the driven device, in the gear ratio change control.

3. The control device according to claim 1 or 2, further comprising:
a setting unit that sets the set gear ratio to be variable.

4. The control device according to claim 3,
wherein the setting unit is configured to set any one of a lock gear ratio determined in advance as a gear ratio for locking rotation of the driven device and a rotation-allowing gear ratio determined in advance as a gear ratio for allowing the rotation of the driven device, as the set gear ratio.

5. The control device according to claim 3 or 4,
wherein the setting unit is capable of changing the set gear ratio in a stepwise or continuous manner within a rotation-allowing gear ratio range determined in advance as a gear ratio range for allowing rotation of the driven device.

6. The control device according to any one of claims 1 to 5,
wherein in a case where an abnormality occurs in a main power supply that supplies power to the drive actuator, the operation control unit performs the gear ratio change control using power supplied from an auxiliary power supply.

7. An actuator unit comprising:
the drive actuator according to any one of claims 1 to 6; and
the control device according to any one of claims 1 to 6.

8. The actuator unit according to claim 7,
wherein the shift actuator has a self-locking function that allows transmission of power from an input side to an output side and restricts transmission of power from the output side to the input side.

9. A robot comprising:
a first joint portion;
a first actuator unit that is the actuator unit according to claim 7 or 8 incorporated into the first joint portion;
a second joint portion; and
a second actuator unit that is the actuator unit according to claim 7 or 8 incorporated into the second joint portion,
wherein the respective control devices of the first actuator unit and the second actuator unit are configured to set the set gear ratio independently of each other.
